# EUROPEAN PATENT APPLICATION

(11) **EP 1 803 939 A1**
(43) Date of publication of application: **04.07.2007**
(21) Application number: 05785815.1
(22) Date of filing: 22.09.2005
(51) Int. Cl.: F04C 18/02, F04C 29/00, F16C 33/20, C10M 107/38, C10M 149/18, C10N 20/00, C10N 30/06, C10N 40/02, C10N 50/08

(54) **SLIDE MEMBER AND FLUID MACHINE**

(30) Priority: 28.09.2004 JP 2004281330; 01.03.2005 JP 2005056487
(71) Applicant: DAIKIN INDUSTRIES, LTD., Osaka-shi, Osaka 530-8323 (JP)
(72) Inventor: OKAWA, Takeyoshi, Daikin Industries Ltd., Sakai-shi, Osaka 591-8511 (JP); TAKEDA, Nobuaki, Daikin Industries Ltd., Settsu-shi, Osaka 566-8585 (JP); KASAI, Shunji, Daikin Industries Ltd., Settsu-shi, Osaka 566-8585 (JP); KINOSHITA, Takuya, Daikin Industries Ltd., Settsu-shi, Osaka 566-8585 (JP); ASAI, Manabu, Daikin Industries Ltd., Settsu-shi, Osaka 566-8585 (JP); MIKI, Norihiko, Daikin Industries Ltd., Settsu-shi, Osaka 566-8585 (JP)
(74) Representative: Goddar, Heinz J.
(86) International application number: PCT/JP2005/017524
(87) International publication number: WO 2006/035680

(57) **Abstract**

A lubrication part **(70)** serving as a bearing metal is provided in a scroll compressor **(10)** at a sliding part between a cylindrical part **(26)** of a slide bush **(25)** and an extension **(53)** of a movable scroll **(50).** The inner periphery of the lubrication part **(70)** is formed so that its iron substrate is given a surface roughness Ra of 3.7 µm and a resin layer containing FEP and PTFE is then provided on the roughened substrate surface.

## Description

### Technical Field

This invention relates to sliding elements and fluid compressor machines and particularly relates to a sliding element including a fluorine-containing resin layer formed on a surface of its metal substrate and a fluid machine using the sliding element.

### Background Art

Almost all machines presently used employ sliding elements, such as bearings or meshing gears. Such sliding elements are required to have not only necessary mechanical strength but also slidability or wear resistance in their surfaces. An example of a method for satisfying the slidability or wear resistance is to supply liquid lubricant to their sliding parts. However, depending upon where the sliding element is used, the supply of liquid lubricant may be unfavorable. In addition, the supply of liquid lubricant often leads to cost rise. For these reasons, there have been developed great many techniques for giving slidability or wear resistance to the sliding element surface without using liquid lubricant. An example of the techniques is a technique for forming a sliding coating on a surface of the sliding element.

Since sliding elements are required to have mechanical strength, their substrates are in many cases made of metal. Sliding coatings commonly used for the substrates include solid lubricants, such as MoS₂ or graphite, and polymeric compounds, such as fluororesin, because they have good sliding performance. However, because such solid lubricants and polymeric compounds (resins) have poor adhesion property to metal constituting the substrate, various considerations have been made in order to enhance the adhesion property.

Methods often considered as measures to enhance the adhesion property are to roughen the substrate surface and apply solid lubricant or resin to the roughened surface (see, for example, Patent Document 1 and Patent Document 2). According to the methods, the adhesion property is enhanced by penetrating solid lubricant or resin into microscopic recesses in the substrate surface.
Patent Document 1: Published Japanese Patent Application No. H05-180231
Patent Document 2: Published Japanese Patent Application No. 2000-145804

### Disclosure of the Invention

### Problems to Be Solved by the Invention

The technique disclosed in Patent Document 1 involves hardening the surface layer of the metal substrate. Therefore, the technique cannot be applied to sliding elements not involved in such hardening.

According to a Barfield-type constant-velocity joint disclosed in Patent Document 2, the substrate surface is subjected to shot blasting to have a surface roughness of 10 to 30 µm in terms of center line average roughness Ra. Therefore, the surface has only large concavities and convexities of simple profile, which provides a small effect of penetrating solid lubricant or resin into the concavities. This does not offer enhanced adhesion property. Particularly, if resin is applied to the substrate surface, a problem occurs that, during service, the resin may be peeled off from the substrate, thereby significantly increasing the coefficient of friction of the joint. This problem cannot be solved even if the substrate surface after shot blasted to have a surface roughness of 10 to 30 µm in terms of center line average roughness Ra is subjected to conversion treatment.

The present invention has been made in view of the foregoing and, therefore, its object is to provide a sliding element in which a fluororesin-containing sliding coating has an enhanced adhesion property to the substrate surface and a fluid machine using the same.

### Means to Solve the Problems

To attain the above object, in the present invention, a sliding element includes a fluororesin-containing resin layer on a surface of its metal substrate.

Specifically, a first aspect of the invention is directed to a sliding element including a fluororesin-containing resin layer on a surface of a metal substrate. Furthermore, the surface of the substrate is subjected to surface roughening to have a surface roughness larger than 0.5 µm and smaller than 10 µm in terms of the arithmetic mean height Ra of the profile of the surface.

According to the first aspect, the substrate surface and the resin layer are firmly adhered to each other and there is almost no possibility of the resin layer chipping off from the substrate.

A second aspect of the invention is the sliding element according to the first aspect, wherein the surface of the substrate is subjected to surface roughening to have a surface roughness larger than 0.75 µm and smaller than 10 µm in terms of the arithmetic mean height Ra of the profile of the surface.

According to the second aspect, the substrate surface and the resin layer are very firmly adhered to each other and, therefore, the chipping off of the resin layer from the substrate can be surely prevented.

A third aspect of the invention is the sliding element according to the first or second aspect, wherein the surface roughening is conversion treatment.

According to the third aspect, the surface roughening can be carried out with high accuracy and high reproducibility.

A fourth aspect of the invention is the sliding element according to any one of the first to third aspects, wherein the resin layer contains polyamide-imide resin.

According to the fourth aspect, the resin layer can be made hard to break and can be more firmly adhered to the metal substrate.

A fifth aspect of the invention is the sliding element according to any one of the first to fourth aspects, wherein a surface layer of the substrate is subjected to no hardening.

According to the aspect recited in claim 5, the need to additionally carry out hardening is eliminated, thereby providing cost reduction.

A sixth aspect of the invention is directed to a fluid machine including a sliding element. Furthermore, the sliding element includes a fluororesin-containing resin layer on at least part of a surface of a metal substrate and the surface of the substrate under the resin layer is subjected to surface roughening to have a surface roughness larger than 0.5 µm and smaller than 10 µm in terms of the arithmetic mean height Ra of the profile of the surface.

According to the sixth aspect, the substrate surface and the resin layer of the sliding element in the fluid machine are firmly adhered to each other and there is almost no possibility of the resin layer chipping off from the substrate.

A seventh aspect of the invention is the fluid machine according to the sixth aspect, wherein the surface of the substrate under the resin layer is subjected to surface roughening to have a surface roughness larger than 0.75 µm and smaller than 10 µm in terms of the arithmetic mean height Ra of the profile of the surface.

According to the seventh aspect, the substrate surface and the resin layer are very firmly adhered to each other and, therefore, the chipping off of the resin layer from the substrate can be surely prevented.

An eighth aspect of the invention is the fluid machine according to the sixth or seventh aspect, wherein the surface roughening is conversion treatment.

According to the eighth aspect, the surface roughening can be carried out with high accuracy and high reproducibility.

A ninth aspect of the invention is the fluid machine according to any one of the sixth to eighth aspects, wherein the resin layer contains polyamide-imide resin.

According to the ninth aspect, the resin layer can be made hard to break and can be more firmly adhered to the metal substrate.

A tenth aspect of the invention is the fluid machine according to any one of the sixth to ninth aspects, wherein the sliding element is exposed to refrigerant.

According to the tenth aspect, particularly the lubricating property in refrigerant can be enhanced.

An eleventh aspect of the invention is the fluid machine according to the tenth aspect, wherein the refrigerant contains a fluorine-containing material.

According to the eleventh aspect, a compressor with high cooling efficiency and excellent lubricating property can be provided.

A twelfth aspect of the invention is the fluid machine according to the tenth or eleventh aspect, wherein the mixture ratio of lubricant to the refrigerant is 5% or less.

According to the twelfth aspect, since the mixture ratio of lubricant to the refrigerant is small, the cooling efficiency can be enhanced.

A thirteenth aspect of the invention is the fluid machine according to the tenth or eleventh aspect, wherein substantially no lubricant is mixed in the refrigerant.

According to the thirteenth aspect, the cooling efficiency can be significantly enhanced.

A fourteenth aspect of the invention is the fluid machine according to any one of the sixth to thirteenth aspects, further comprising a scroll mechanism **(40)** including a pair of scrolls **(50, 60)** meshing with each other. Furthermore, at least one of the pair of scrolls **(50, 60)** constitutes the sliding element. In addition, the scroll **(50, 60)** serving as the sliding element includes the resin layer on at least part of a surface of a metal substrate.

According to the fourteenth aspect, the resin layer formed on at least one of the scrolls **(50, 60)** is firmly adhered to the substrate and there is almost no possibility of the resin layer chipping off from the substrate.

A fifteenth aspect of the invention is the fluid machine according to the fourteenth aspect, wherein the resin layer is directly formed on a bearing part **(53)** of the movable scroll **(50).**

According to the fifteenth aspect, since the resin layer is directly formed on the bearing part **(53)** of the movable scroll **(50),** the bearing part **(53)** of the movable scroll **(50)** is firmly adhered to the resin layer and the processing can be simplified.

A sixteenth aspect of the invention is the fluid machine according to the fourteenth aspect, wherein the resin layer is directly formed on the entire movable scroll **(50).**

According to the sixteenth aspect, since the resin layer is formed on the entire movable scroll **(50),** this facilitates the processing.

A seventeenth aspect of the invention is the fluid machine according to the fourteenth aspect, wherein the resin layer is directly formed on a movable wrap **(52)** of the movable scroll **(50).**

According to the seventeenth aspect, since the resin layer is directly formed on the movable wrap **(52)** of the movable scroll **(50),** the surface of the movable wrap **(52)** of the movable scroll **(50)** is firmly adhered to the resin layer and the clearance between the movable scroll **(50)** and the fixed scroll **(60)** can be reduced.

An eighteenth aspect of the invention is the fluid machine according to the fourteenth aspect, wherein the resin layer is directly formed on an entire surface of the fixed scroll **(60)** opposed to the movable scroll **(50).**

According to the eighteenth aspect, since the resin layer is directly formed on the entire surface of the fixed scroll **(60)** opposed to the movable scroll **(50),** the fixed scroll **(60)** is firmly adhered to the resin layer and the clearance between the fixed scroll **(60)** and the movable scroll **(50)** can be reduced.

A nineteenth aspect of the invention is the fluid machine according to the sixth aspect, further comprising a scroll mechanism **(40)** including a pair of scrolls **(50, 60)** meshing with each other. Furthermore, a thrust bearing **(80)** of the movable scroll **(50)** of the pair of scrolls **(50, 60)** constitutes the sliding element. In addition, the thrust bearing **(80)** serving as the sliding element includes the resin layer directly formed on a sliding surface **(81)** thereof on the movable scroll **(50).**

According to the nineteenth aspect, since the resin layer is directly formed on the sliding surface **(81)** of the thrust bearing **(80)** on the movable scroll **(50),** the thrust bearing **(80)** and the resin layer are firmly adhered to each other.

### Effects of the Invention

According to the first aspect, the adhesion property of the resin layer to the metal substrate is enhanced, thereby providing excellent slidability.

According to the second aspect, the adhesion property of the resin layer to the metal substrate is surely enhanced, thereby providing very excellent slidability.

According to the third aspect, the surface roughening of the metal substrate can be carried out with high accuracy and high reproducibility.

According to the fourth aspect, the resin layer can be hardened and the adhesion property of the layer to the metal substrate can be further enhanced.

According to the fifth aspect, cost reduction can be achieved.

According to the sixth aspect, the sliding element in the fluid machine exhibits high adhesion property of the resin layer to the substrate surface and thereby providing excellent slidability.

According to the seventh aspect, the sliding element in the fluid machine exhibits surely exhibits high adhesion property of the resin layer to the substrate surface and thereby providing very excellent slidability.

According to the eighth aspect, the surface roughening of the metal substrate of the sliding element in the fluid machine can be carried out with high accuracy and high reproducibility.

According to the ninth aspect, the resin layer of the sliding element in the fluid machine can be hardened and the adhesion property of the layer to the metal substrate can be further enhanced.

According to the tenth aspect, both the cooling efficiency and the lubricating property can be enhanced.

According to the eleventh aspect, the lubricating property and the compatibility of the sliding element with refrigerant can be enhanced.

According to the twelfth aspect, the cooling efficiency can be enhanced while the lubricating property is maintained.

According to the thirteenth aspect, the cooling efficiency can be enhanced while the lubricating property is maintained.

According to the fourteenth aspect, the adhesion property of the resin layer formed on at least one of the scrolls **(50, 60)** can be enhanced, thereby providing excellent slidability.

According to the fifteenth aspect, the adhesion property of the resin layer to the bearing part of the movable scroll **(50)** can be enhanced, thereby providing further simplified processing.

According to the sixteenth aspect, the need is eliminated to subject only a particular part of the movable scroll **(50)** to a treatment for forming a resin layer, thereby facilitating the processing.

According to the seventeenth aspect, the adhesion property of the resin layer to the surface of the movable wrap **(52)** of the movable scroll **(50)** can be enhanced and the clearance between the movable scroll **(50)** and the fixed scroll **(60)** can be reduced, thereby providing good sealing property.

According to the eighteenth aspect, the adhesion property of the resin layer to the fixed scroll **(60)** can be enhanced and the clearance between the movable scroll **(50)** and the fixed scroll **(60)** can be reduced, thereby providing good sealing property.

According to the nineteenth aspect, the adhesion property of the resin layer to the sliding surface **(81)** of the thrust bearing **(80)** on the movable scroll can be enhanced, whereby the slidability in the sliding surfaces of the movable scroll **(50)** and the thrust bearing **(80)** can be enhanced.

### Brief Description of Drawings

[Fig. 1] Figure **1** is a cross-sectional view of a scroll compressor according to Embodiment 1.
[Fig. 2] Figure **2** is a schematic diagram illustrating a limit surface pressure test.
[Fig. 3] Figure **3** is a graph showing the relation between the surface roughness Ra and the limit PV of a substrate.
[Fig. 4] Figure **4** is a graph showing the results of a sliding test carried out in refrigerant.
[Fig. 5] Figure **5** is a graph showing the results of the limit surface pressure test carried out in the air.
[Fig.6] Figure **6** is a graph showing the results of a wear amount test carried out in the air.
[Fig. 7] Figure **7** is a cross-sectional view of a scroll compressor according to Embodiment 2.
[Fig. 8] Figure **8** is a cross-sectional view of a swing compressor according to Embodiment 3.
[Fig. 9] Figure **9** is a horizontal cross-sectional view showing the in-cylinder structure of the swing compressor according to Embodiment 3.
[Fig. 10] Figure **10** is a cross-sectional view of a swing compressor according to Embodiment 4.
[Fig. 11] Figure **11** is a cross-sectional view of a rotary compressor according to Embodiment 5.
[Fig. 12] Figure **12** is a horizontal cross-sectional view showing the in-cylinder structure of the rotary compressor according to Embodiment 5.

### Explanation of Reference Numerals

- **50**: movable scroll
- **52**: movable wrap
- **53**: extension
- **60**: fixed scroll
- **80**: thrust bearing
- **81**: top surface of the thrust bearing

### Best Mode for Carrying Out the Invention

Embodiments of the present invention will be described below in detail with reference to the drawings.

### (Embodiment 1)

A scroll compressor **(10)** according to this embodiment is a fluid machine provided in a refrigerant circuit of a refrigeration system and used to compress gas refrigerant that is a fluid.

### <<Overall Structure of Scroll Compressor>>

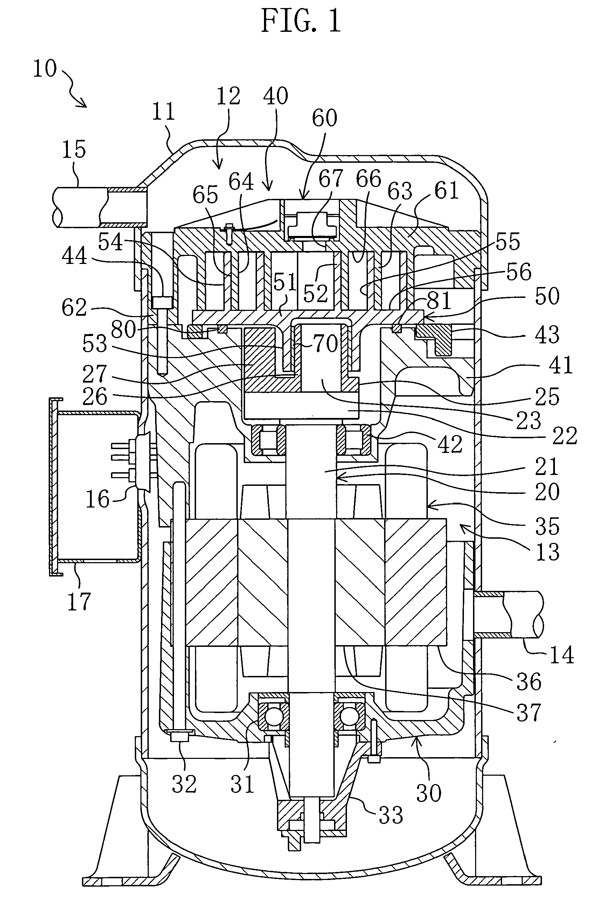

As shown in Figure **1,** the scroll compressor **(10)** is of so-called fully enclosed type. The scroll compressor **(10)** includes a casing **(11)** formed in the shape of a vertically elongated, cylindrical, airtight container. The casing **(11)** contains a lower bearing unit **(30),** an electric motor **(35)** and a compression mechanism **(40)** as a scroll mechanism which are disposed thereinside in order from bottom to top. Furthermore, the casing **(11)** is internally provided with a vertically extending drive shaft **(20).**

The interior of the casing **(11)** is partitioned from top to bottom by a fixed scroll **(60)** of the compression mechanism **(40).** Out of the interior spaces of the casing **(11),** one above the fixed scroll **(60)** is configured as a first chamber **(12)** and the other below the fixed scroll **(60)** is configured as a second chamber **(13).**

A suction pipe **(14)** is mounted to the body of the casing **(11).** The suction pipe **(14)** opens into the second chamber **(13)** in the casing **(11).** A discharge pipe **(15)** is mounted to the upper end of the casing **(11).** The discharge pipe **(15)** opens into the first chamber **(12)** in the casing **(11).**

The drive shaft **(20)** has a main spindle **(21),** a flange **(22)** and an eccentric part **(23).** The flange **(22)** is formed at the upper end of the main spindle **(21)** and has the shape of a disc having a larger diameter than the main spindle **(21).** The eccentric part **(23)** extends from the top surface of the flange **(22).** The eccentric part **(23)** has the shape of a round column having a smaller diameter than the main spindle **(21)** and its axis is eccentric with respect to the axis of the main spindle **(21).**

The main spindle **(21)** of the drive shaft **(20)** passes through a frame member **(41)** of the compression mechanism **(40).** The main spindle **(21)** is supported through a roller bearing **(42)** to the frame member **(41).** The flange **(22)** and the eccentric part **(23)** of the drive shaft **(20)** is located in the second chamber **(13)** above the frame member **(41).**

A slide bush **(25)** is mounted to the drive shaft **(20).** The slide bush **(25)** includes a cylindrical part **(26)** and a balance weight **(27)** and is disposed on the flange **(22).** The eccentric part **(23)** of the drive shaft **(20)** is inserted in the cylindrical part **(26)** of the slide bush **(25).**

The lower bearing unit **(30)** is located within the second chamber **(13)** in the casing **(11).** The lower bearing unit **(30)** is fixed to the frame member **(41)** by a bolt **(32).** Furthermore, the lower bearing unit **(30)** supports the main spindle **(21)** of the drive shaft **(20)** through a ball bearing **(31).**

An oil pump **(33)** is mounted to the lower bearing unit **(30).** The oil pump **(33)** engages with the lower end of the drive shaft **(20).** The oil pump **(33)** is driven by the drive shaft **(20)** to suck up refrigerator oil accumulating in the bottom of the casing **(11).** The refrigerator oil sucked up by the oil pump **(33)** is fed through a channel formed inside the drive shaft **(20)** as to the compression mechanism **(40).**

The electric motor **(35)** includes a stator **(36)** and a rotor **(37).** The stator **(36)** is fixed, together with the lower bearing unit **(30),** to the frame member **(41)** by the bolt **(32).** The rotor **(37)** is fixed to the main spindle **(21)** of the drive shaft **(20).**

A terminal **(16)** for power feed is mounted to the body of the casing **(11).** The terminal **(16)** is covered with a terminal box **(17).** The electric motor **(35)** is fed with electric power through the terminal **(16).**

### <<Structure of Compression Mechanism>>

The compression mechanism **(40)** includes the fixed scroll **(60)** and a movable scroll **(50)** and also includes the frame member **(41)** and an Oldham ring **(43).** The compression mechanism **(40)** employs, for example, a so-called asymmetric scroll design.

The movable scroll **(50)** includes a movable plate **(51),** a movable wrap **(52)** and an extension **(53).** The movable plate **(51)** is formed in the shape of a thickish disc. The extension **(53)** is integrally formed with the movable plate **(51)** to extend from the bottom surface (back surface) of the movable plate **(51).** The extension **(53)** is located substantially in the center of the movable plate **(51).** The extension **(53)** receives the cylindrical part **(26)** of the slide bush **(25),** thereby constituting a bearing part. In other words, the eccentric part **(23)** of the drive shaft **(20)** is inserted through the slide bush **(25)** in the movable scroll **(50).**

The movable wrap **(52)** stands up from the top surface (front surface) of the movable plate **(51)** and is integrally formed with the movable plate **(51).** The movable wrap **(52)** is formed in the shape of a spiral wall having a constant height.

The movable scroll **(50)** is disposed on the frame member **(41)** with the Oldham ring **(43)** and a thrust bearing **(80)** interposed therebetween. The Oldham ring **(43)** is formed with two pairs of keys. One of the two pairs of keys of the Oldham ring **(43)** engage with the movable plate **(51)** and the remaining pair of keys engage with the frame member **(41).** The Oldham ring **(43)** restricts the rotation of the movable scroll **(50)** on its axis. The Oldham ring **(43)** can slide on the movable scroll **(50)** and the frame member **(41).**

The thrust bearing **(80)** is disposed in a recess of the frame member **(41).** The top surface of the thrust bearing **(80)** provides a sliding surface on which the bottom surface of the movable plate **(51)** of the movable scroll **(50)** slides. In other words, the movable scroll **(50)** can move bodily around the drive shaft **(20)** while sliding with the bottom surface of the movable plate **(51)** on the top surface **(81)** of the thrust bearing **(80).**

As shown in Figure **1,** the fixed scroll **(60)** includes a fixed plate **(61),** a fixed wrap **(63)** and a brim **(62).** The fixed plate **(61)** is formed in the shape of a thickish disc. The diameter of the fixed plate **(61)** is approximately equal to the inner diameter of the casing **(11).** The brim **(62)** is formed in the shape of a wall extending downward from the peripheral edge of the fixed plate **(61).** The fixed scroll **(60)** is fixed to the frame member **(41)** by a bolt **(44),** with the lower end of the brim **(62)** abutting on the frame member **(41).** The fixed scroll **(60)** is in close contact at its brim **(62)** with the casing **(11),** thereby partitioning the interior of the casing **(11)** into the first chamber **(12)** and the second chamber **(13).**

The fixed wrap **(63)** stands up from the bottom surface (front surface) of the fixed plate **(61)** and is integrally formed with the fixed plate **(61).** The fixed wrap **(63)** is formed in the shape of a spiral wall having a constant height and has a length of approximately three helical turns.

An inner wrap face **(64)** and an outer wrap face **(65)** of the fixed wrap **(63),** which are both side faces thereof, slide respectively on an outer wrap face **(54)** and an inner wrap face **(55)** of the movable wrap **(52),** which are both side faces thereof. The bottom surface (front surface) of the fixed plate **(61),** i.e., a bottom land **(66)** thereof from which the fixed wrap **(63)** does not extend, slides on the end face of the movable wrap **(52).** The top surface (front surface) of the movable plate **(51),** i.e., a land **(56)** thereof from which the movable wrap **(52)** does not extend, slides on the end face of the fixed wrap **(63).** Furthermore, the fixed plate **(61)** has a discharge port **(67)** formed in the vicinity of the volute center of the fixed wrap **(63).** The discharge port **(67)** passes through the fixed plate **(61)** and opens into the first chamber **(12).**

As described above, the scroll compressor **(10)** of this embodiment is disposed in the refrigerant circuit for a refrigerator. The refrigerant circuit operates in a vapor compression refrigeration cycle by circulating refrigerant therethrough. During the operation, the scroll compressor **(10)** sucks low-pressure gas refrigerant from an evaporator, compresses it and feeds out high-pressure gas refrigerant obtained by compression towards a condenser.

The refrigerant contains a fluorine-containing material. The mixture ratio of lubricant to the refrigerant is 5% or less, or alternatively substantially no lubricant is mixed in the refrigerant.

When the scroll compressor **(10)** is driven, the cylindrical part **(26)** of the slide bush **(25)** slides on the extension **(53)** of the movable scroll **(50).** In this embodiment, the sliding part is provided with a lubrication part **(70)** serving as a bearing metal. The lubrication part **(70)** has a cylindrical form and constitutes a sliding element in which its substrate is made of iron and a lubricant layer (resin layer) is provided on a surface (the inner surface) of the substrate. The inner surface of the lubrication part **(70)** provided with the lubricant layer slides on the outer surface of the cylindrical part **(26)** of the slide bush **(25).**

The substrate surface of the lubrication part **(70)** is first subjected to conversion treatment to have a surface roughness Ra of 3.7 µm. Then, a lubricant layer, which is a resin layer of approximately 100 µm thickness, is formed on the substrate surface by applying on the substrate surface a lubricant obtained by mixing polyamide-imide resin (hereinafter, referred to as PAI), polytetrafluoroethylene (hereinafter, referred to as PTFE) and polytetrafluoroethylene-hexafluoropropylene copolymer resin (hereinafter, referred to as FEP) together. Note that here the surface roughness Ra indicates the arithmetic mean height Ra of the surface profile, as defined in JIS B0601-2001. Also in the description below, the expression of "surface roughness Ra" indicates the arithmetic mean height Ra defined in JIS.

The placement of the lubrication part **(70)** having the above configuration enables the cylindrical part **(26)** of the slide bush **(25)** and the lubrication part **(70)** to continue to slide together at a low coefficient of friction for a very long time even while being exposed to the refrigerant.

### <<Evaluation of Sliding Part>>

Next, a description is given of studies made on the lubrication part **(70).**

Fluorine-containing resins have low coefficient of friction on metal and excellent slidability. However, as already described in "Problems to Be Solved by the Invention", fluorine-containing resins have poor adhesion property to the metal substrate and, therefore, are readily peeled off from the metal substrate. The Inventors conducted intensive studies on what surface roughness of the substrate could improve the adhesion property of fluorine-containing resin to the substrate.

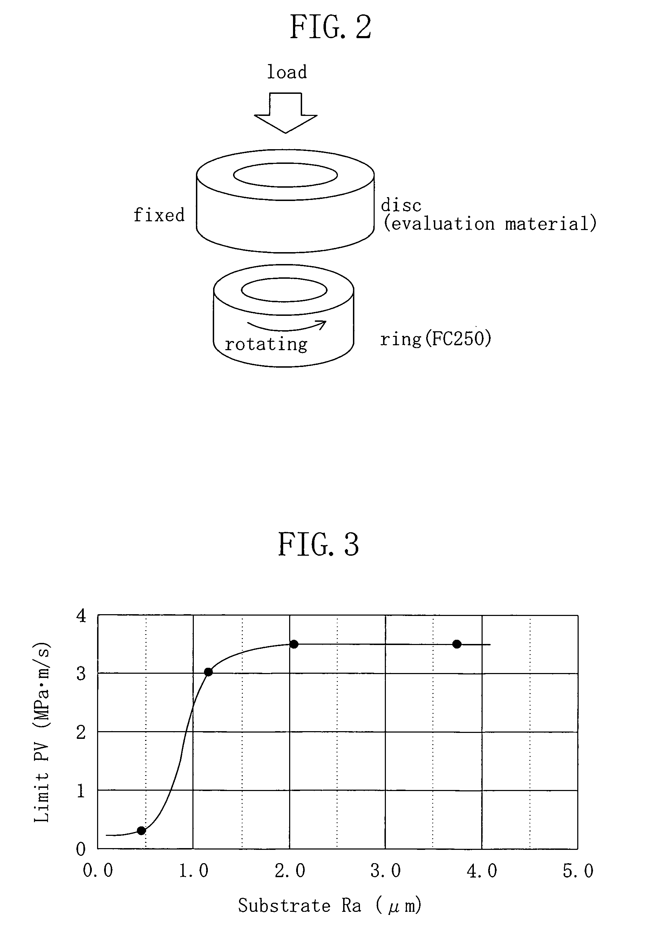

The way of studies was carried out according to a limit surface pressure test using a ring and a disc specimen as shown in Figure **2**. The limit surface pressure test is a test for evaluating the adhesion property of lubricant to the substrate, in which evaluation is made by rotating the ring made of SUJ2 (according to JIS G4805-1990) at a constant velocity and pressing the evaluation specimen (disc) against the ring along the axis of rotation. In the evaluation test, the load imposed on the ring by pressing was increased stepwise at regular time intervals while the torque against the ring was measured.

Then, the load when the torque abruptly increased was converted to a surface pressure and the product of the surface pressure and the rotational velocity was determined as a limit PV (limit surface pressure-velocity product) that is an evaluation index for adhesion property. Specifically, when the lubricant of the specimen is peeled off from the substrate, the coefficient of friction between the ring and the disc abruptly increases and the torque abruptly increases. Therefore, the adhesion property can be evaluated from the limit PV. As the limit PV increases, the adhesion property becomes more excellent. Note that the above test was made in the atmosphere without interposing any lubrication oil between the ring and the disc.

Each specimen was prepared by roughening a surface of an iron substrate by conversion treatment and then forming on the surface a lubricant layer containing fluororesin. The surface roughness Ra of the substrate was controlled by changing the treatment conditions of the conversion treatment. In the above test, manganese phosphate was used for the conversion treatment. The lubricant layer was formed from a resin mixture having a composition of PAI/FEP/PTFE = 70/24/6. The lubricant layer was formed into a thickness of approximately 100 µm. After the application of the resin mixture, the lubricant layer was sintered and its surface was then polished.

Figure **3** is a graph showing the relation between the surface roughness Ra and the limit PV of the substrate. Note that "Substrate Ra" shown in Figure 3 indicates the arithmetic mean height Ra of the profile in the substrate surface, as defined in JIS B0601-2001.

As can be seen from the graph, if Ra is smaller than 0.5 µm, the limit PV is less than 0.4 MPa·m/s. If Ra is over 0.5 µm, the limit PV is larger than 0.4 MPa·m/s, which provides sufficient adhesion property for the application to general sliding elements. If the limit PV is not smaller than 1 MPa·m/s (i.e., Ra is not smaller than 0.75 µm), the substrate surface can hold sufficient adhesion property even upon change of the environment, which is preferable. Note that, for applications in which higher adhesion property is needed, the limit PV is preferably not smaller than 1.0 MPa·m/s (i.e., Ra is preferably not smaller than 0.75 µm) and, more preferably, not smaller than 1.5 MPa·m/s (i.e., Ra is more preferably not smaller than 0.85 µm).

On the other hand, if the surface roughness Ra is too large, the maximum height Rz in the roughened surface is increased. Therefore, part of the substrate protrudes beyond the surface of the lubricant layer. In addition, in order to increase the surface roughness Ra, the conversion treatment must be carried out for a long time, which raises the cost and easily breaks the concavities and convexities of the substrate surface formed by the conversion treatment. For these reasons, the surface roughness Ra is preferably smaller than 10 µm. More preferably, the surface roughness Ra is not larger than 5 µm because the lubricant layer can be formed at low cost.

Next, a sliding performance evaluation test was made on Sample B of this embodiment obtained by subjecting an iron substrate to conversion treatment to have a surface roughness Ra of 3.7 µm, applying a lubricant layer of the above composition to the substrate surface, sintering the substrate and polishing the substrate surface and Sample A formed for comparison. Sample A was obtained by forming a porous bronze sintered compact (having a surface roughness Ra of not smaller than 30 µm) on an iron plate and impregnating the iron plate with fluororesin. Note that Comparative Sample A is a conventional sliding element used in air-conditioning scroll compressors.

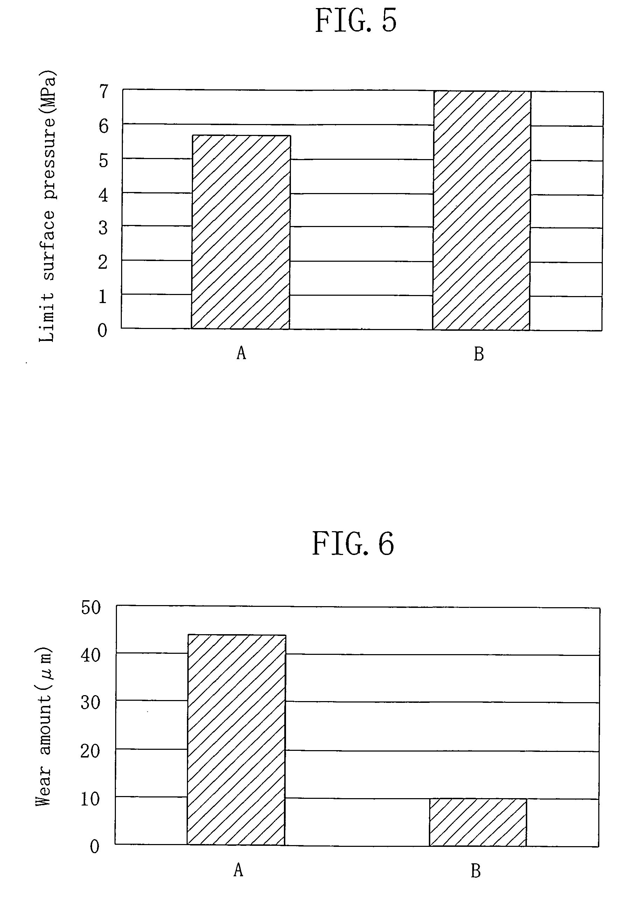

Figure 5 shows the results of a limit surface pressure test made in the air without using any lubrication oil. Comparative Sample A seized at a surface pressure of approximately 5.5 MPa, but Sample B did not seize even when the surface pressure reached 7 MPa that is an upper limit for the tester.

Figure 6 shows the results of a wear amount test made in the air without using any lubrication oil. The test was carried out under conditions that sliding was made at a surface pressure of 2.8 MPa and a sliding velocity of 1 m/s for an hour. Referring to the graph, Comparative Sample A exhibited a wear amount of approximately 45 µm but Sample B exhibited a very small wear amount of approximately 10 µm. This shows that Sample B is excellent in wear resistance.

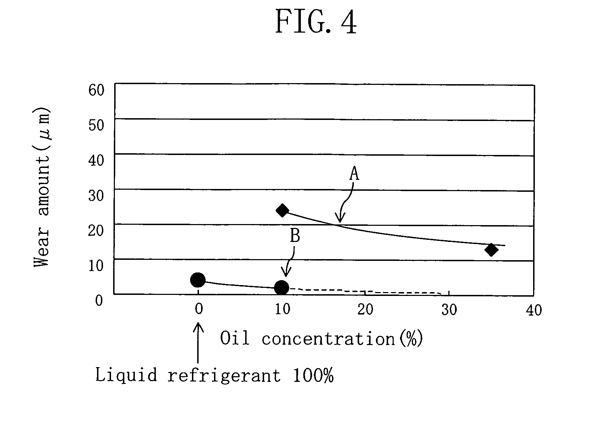

Figure **4** shows the results of a sliding test in refrigerant. In air-conditioning compressors, generally, the refrigerant (HFC refrigerant) and a lubrication oil are used in the form of a mixture in a ratio of 65:35. In this test, however, data were collected by changing the mixture ratio (concentration) of the lubrication oil. The HFC refrigerant contains a fluorine-containing material. In the sliding test results shown in Figure 4, the wear amounts of the specimen after sliding for two hours under the conditions of a surface pressure of 3 MPa and a sliding velocity of 2 m/s are laid off as ordinates. The abscissa in the graph indicates percentages of the lubrication oil mixed in the refrigerant.

Comparative Sample A is a conventional element used in sliding parts. Its wear amount was 13 µm at a normal lubrication oil concentration of 35% but increased to 24 µm at a lubrication oil concentration of 10%. For Sample B, its wear amount was 2 µm at a lubrication oil concentration of 10% and was very small, 4 µm, even at a lubrication oil concentration of 0%, i.e., at a refrigerant concentration of 100%. Therefore, the wear amount of Sample B according to this embodiment at a refrigerant concentration of 100% was smaller than that of Comparative Sample A at a normal lubrication oil concentration (35%).

As is obvious from the above results, since Sample B according to this embodiment hardly wears ever at a lubrication oil concentration of 0%, there is no need to mix lubrication oil into refrigerant, which significantly improves the cooling efficiency. Since the fluororesin exists in the surface of the sliding element, the surface is well fitted to refrigerant containing a fluorine-containing material, which improves the sliding performance. It can be considered that at the start or transition of the compressor the sliding part is put under a completely dry condition in which no refrigerant exists. Even in such a case, Sample B according to this embodiment exhibits excellent sliding performance. Such excellent sliding performance cannot be provided unless the adhesion property of the fluorine-containing resin layer (lubricant layer) to the substrate becomes high. In other words, since the substrate surface of Sample B has an appropriate range of surface roughnesses Ra, Sample B is very excellent in the adhesion property of the fluorine-containing resin layer to the substrate. Therefore, Sample B can exhibit an excellent sliding performance.

Next, a description is given of the composition of the fluororesin-containing resin layer.

The main component of the fluororesin-containing resin layer is preferably composed of fluororesin of 15 mass% to 35 mass% both inclusive and polyamide-imide resin of 65 mass% to 85 mass% both inclusive. The fluororesin in the main component is preferably composed of FEP and PTFE. In the fluororesin, the content of FEP is preferably higher than that of PTFE. Specifically, the mass ratio of FEP to PTFE in the fluororesin is preferably FEP:PTFE = 7:3 to 99:1 and, more preferably, FEP to PTFE is 9 to 1.

If polyamide-imide resin is mixed into the resin layer in the above manner, excellent impact resistance of polyamide-imide resin can be utilized to form a high-impact resistance, hard-to-peel resin coating on the sliding surface of the element. Furthermore, since polyamide-imide resin also has a characteristic of high hardness, the resin coating provides a comparatively hard and hard-to-wear coating.

In addition to the main component composed of fluororesin and polyamide-imide resin, the fluororesin-containing resin layer may contain a pigment serving as a colorant, such as carbon, or other additives. The amount of additives is selected to such a value that does not adversely affect the performance of the fluororesin-containing resin layer and the adhesion property thereof to the substrate. For example, carbon as an additive should be selected to not larger than 3% by mass of fluororesin, preferably not larger than 1% by mass thereof and more preferably not larger than 0.5% by mass thereof.

The thickness of the fluororesin-containing resin layer is preferably 35 µm to 120 µm both inclusive. If the thickness is smaller than 35 µm, the sliding performance might be deteriorated. If the thickness is larger than 120 µm, the production cost will be high. Therefore, in consideration of aspects of the sliding performance and the cost, the thickness of the resin layer is preferably 50 µm to 105 µm both inclusive. Note that the reference to the thickness of the resin layer is made as representative of the average thickness but the resin layer may locally have thicknesses other than the above range.

According to this embodiment, since in the lubrication part **(**70) serving as a sliding element a lubrication layer is provided by giving the substrate a predetermined surface roughness Ra and forming a fluororesin-containing resin layer on the roughened surface, the substrate and the fluororesin-containing resin layer are firmly adhered to each other, thereby exhibiting excellent sliding performance. Particularly if the sliding element is used in refrigerant containing a fluorine-containing material, it hardly wears even without lubrication oil and can continue to slide at low coefficient of friction for a long time. Furthermore, since the sliding element of this embodiment exhibits excellent sliding performance by subjecting the substrate surface to conversion treatment to have a predetermined surface roughness Ra, it can be easily produced at low cost. Furthermore, since the sliding element of this embodiment can be produced by such a simple method, this method provides not only production of the sliding part between the cylindrical part **(26)** of the slide bush **(25)** and the extension **(53)** of the movable scroll **(50)** but also production of sliding elements of various types and applications.

### - Modification 1 of Embodiment 1 -

Although in Embodiment 1 the sliding element is provided as the lubrication part (70) formed of a separate piece, a sliding element in this modification is obtained by directly forming a resin layer as a lubricant on the extension **(53)** of the movable scroll **(50).**

Specifically, the inner periphery of the extension **(53)** of the movable scroll **(50)** is roughened by conversion treatment so that the substrate has a surface roughness Ra of 1 µm, and a resin layer having a composition of PAI/FEP/PTFE = 70/25/5 is then formed on the inner periphery.

According to this modification, since a resin layer is directly formed on the extension **(53)** of the movable scroll **(50)** that is a sliding element, the number of processing steps can be reduced and the number of parts can also be reduced. The rest of the configuration, the other operations and the other effects are the same as in Embodiment 1.

### - Modification 2 of Embodiment 1 -

Although in Modification 1 a resin layer is formed on a sliding part of the extension **(53)** of the movable scroll **(50),** a resin layer in this modification is instead formed on the bottom surface of the movable plate **(51).**

Specifically, the bottom surface of the movable plate **(51)** of the movable scroll **(50)** in the scroll compressor **(10)** slides on the top surfaces of the thrust bearing **(80)** and the Oldham ring **(43).** Therefore, in this modification, the bottom surface of the movable plate **(51)** is subjected to conversion treatment so that the substrate has a surface roughness Ra of 1 µm and a resin layer having a composition of PAI/FEP/PTFE = 70/25/5 is then formed on the substrate surface.

According to this modification, since a resin layer is directly formed on the movable plate **(51)** of the movable scroll **(50)** that is a sliding element, the number of processing steps can be reduced. The rest of the configuration, the other operations and the other effects are the same as in Embodiment 1.

### - Modification 3 of Embodiment 1 -

Although in Modification 1 a resin layer is formed on the inner periphery of the extension **(53)** of the movable scroll **(50),** a resin layer in this modification is instead directly formed on the movable wrap **(52)** of the movable scroll **(50)** that is a sliding element.

Specifically, the side faces of the movable wrap **(52)** of the movable scroll **(50)** in the scroll compressor **(10)** slide on the side faces of the fixed wrap **(63)** of the fixed scroll **(60).** Furthermore, the end face of the movable wrap **(52)** slides on the bottom land **(66)** of the fixed plate **(61)** of the fixed scroll **(60).** Therefore, in this modification, the surface of the movable wrap **(52)** is subjected to conversion treatment so that the substrate has a surface roughness Ra of 1 µm and a resin layer having a composition of PAI/FEP/PTFE = 70/25/5 is then formed on the substrate surface.

According to this modification, since a resin layer is directly formed on the movable wrap **(52)** of the movable scroll **(50),** the surface of the movable wrap **(52)** of the movable scroll **(50)** is firmly adhered to the resin layer and its clearances to the fixed wrap **(63)** of the fixed scroll **(60)** and the bottom land **(66)** of the fixed plate **(61)** are reduced, thereby providing good sealing property. The rest of the configuration, the other operations and the other effects are the same as in Embodiment 1.

### - Modification 4 of Embodiment 1 -

Although in Modification 1 a resin layer is provided on the inner periphery of the extension **(53)** of the movable scroll **(50),** a resin layer in this modification is instead directly formed on the whole of the movable scroll **(50)** that is a sliding element.

Specifically, in order to improve the slidability of the inner periphery of the extension **(53)** of the movable scroll **(50)** and the bottom surface of the movable plate **(51)** on their counterparts in the scroll compressor **(10)** as described in Modifications 1 and 2 of Embodiment 1 and in order to improve the slidability and sealing property of the movable scroll **(50)** to the opposed faces of the fixed scroll **(60)** as described in Modification 3, a resin layer is directly formed on the entire movable scroll **(50).**

More specifically, the entire surface of the movable scroll **(50)** is subjected to conversion treatment so that the substrate has a surface roughness Ra of 1 µm and a resin layer having a composition of PAI/FEP/PTFE = 70/25/5 is then formed on the substrate surface.

According to this modification, there is no need to partially subjecting the movable scroll **(50)** to a treatment for the formation of a resin layer and the resin layer is directly formed on the entire movable scroll **(50).** Therefore, the number of processing steps can be reduced. The rest of the configuration, the other operations and the other effects are the same as in Embodiment 1.

### - Modification 5 of Embodiment 1 -

Although in Modification 1 a resin layer is provided on the inner periphery of the extension **(53)** of the movable scroll **(50),** a resin layer in this modification is instead directly formed on an entire surface of the fixed scroll **(60)** opposed to the movable scroll **(50).**

Specifically, a surface of the fixed scroll **(60)** opposed to the movable scroll **(50)** in the scroll compressor **(10),** i.e., the fixed wrap **(63)** of the fixed scroll **(60)** and the bottom land **(66)** of the fixed plate **(61),** slides on the movable wrap **(52)** of the movable scroll **(50)** and the top surface of the movable plate **(51).** Therefore, in this modification, both side faces and the end face of the fixed wrap **(63)** of the fixed scroll **(60)** and the bottom land of the fixed plate **(61)** are subjected to conversion treatment so that the substrate has a surface roughness Ra of 1 µm and a resin layer having a composition of PAI/FEP/PTFE = 70/25/5 is then formed on the substrate surface.

According to this modification, since a resin layer is directly formed on the entire opposed surface of the fixed scroll **(60)** to the movable scroll **(50),** the fixed scroll **(60)** is firmly adhered to the resin layer and its clearance to the movable scroll **(50)** is reduced, thereby providing good sealing property. The rest of the configuration, the other operations and the other effects are the same as in Embodiment 1.

### - Modification 6 of Embodiment 1 -

Although in Modification 1 a resin layer is provided on the inner periphery of the extension **(53)** of the movable scroll **(50),** a resin layer in this modification is instead directly formed on the outer periphery of the cylindrical part **(26)** of the slide bush **(25).**

Specifically, the outer periphery of the cylindrical part **(26)** of the slide bush **(25)** in the scroll compressor **(10)** slides on the inner periphery of the extension **(53)** of the movable scroll **(50).** Therefore, in this modification, the outer periphery of the cylindrical part **(26)** of the slide bush **(25)** is subjected to conversion treatment so that the substrate has a surface roughness Ra of 1 µm and a resin layer having a composition of PAI/FEP/PTFE = 70/25/5 is then formed on the substrate surface.

According to this modification, since a resin layer is directly formed on the outer periphery of the cylindrical part **(26)** of the slide bush **(25)** that is a sliding element, the number of processing steps can be reduced and the need is eliminated to provide the lubrication part **(70)** like Modification 1 of Embodiment 1. The rest of the configuration, the other operations and the other effects are the same as in Embodiment 1.

### - Modification 7 of Embodiment 1 -

Although in Modification 1 a resin layer is provided on the inner periphery of the extension **(53)** of the movable scroll **(50),** a resin layer in this modification is instead directly formed on the top surface **(81)** of the thrust bearing **(80).**

Specifically, the top surface **(81)** of the thrust bearing **(80)** in the scroll compressor **(10)** slides on the bottom surface of the movable plate **(51)** of the movable scroll **(50).** Therefore, in this modification, the top surface **(81)** of the thrust bearing **(80)** is subjected to conversion treatment so that the substrate has a surface roughness Ra of 1 µm and a resin layer having a composition of PAI/FEP/PTFE = 70/25/5 is then formed on the substrate surface.

According to this modification, since a resin layer is directly formed on the top surface **(81)** of the thrust bearing **(80),** the top surface **(81)** of the thrust bearing **(80)** and the resin layer are firmly adhered to each other and the slidability can be improved in the sliding part between the top surface **(81)** of the thrust bearing **(80)** and the bottom surface of the movable plate **(51)** of the movable scroll **(50).** The rest of the configuration, the other operations and the other effects are the same as in Embodiment 1.

### - Modification 8 of Embodiment 1 -

**Although** in Modification 1a resin layer is provided on the inner periphery of the extension **(53)** of the movable scroll **(50),** a resin layer in this modification is instead directly formed on the Oldham ring **(43).**

Specifically, one key of the Oldham ring **(43)** in the scroll compressor **(10)** slides on the bottom surface of the movable plate **(51)** of the movable scroll **(50),** while the body and the other key of the Oldham ring **(43)** slide on the frame member **(41).** Therefore, in this modification, the surfaces of the Oldham ring **(43)** are subjected to conversion treatment so that the substrate has a surface roughness Ra of 1 µm and a resin layer having a composition of PAI/FEP/PTFE = 70/25/5 is then formed on the substrate surfaces.

According to this modification, since a resin layer is directly formed on the surfaces of the Oldham ring **(43),** the Oldham ring **(43)** and the resin layer are firmly adhered to each other and the slidability is improved in the sliding part between the one key of the Oldham ring **(43)** and the bottom surface of the movable plate **(51)** of the movable scroll **(50)** and the sliding part between the body and the other key of the Oldham ring **(43)** and the frame member **(41).** The rest of the configuration, the other operations and the other effects are the same as in Embodiment 1.

### (Embodiment 2)

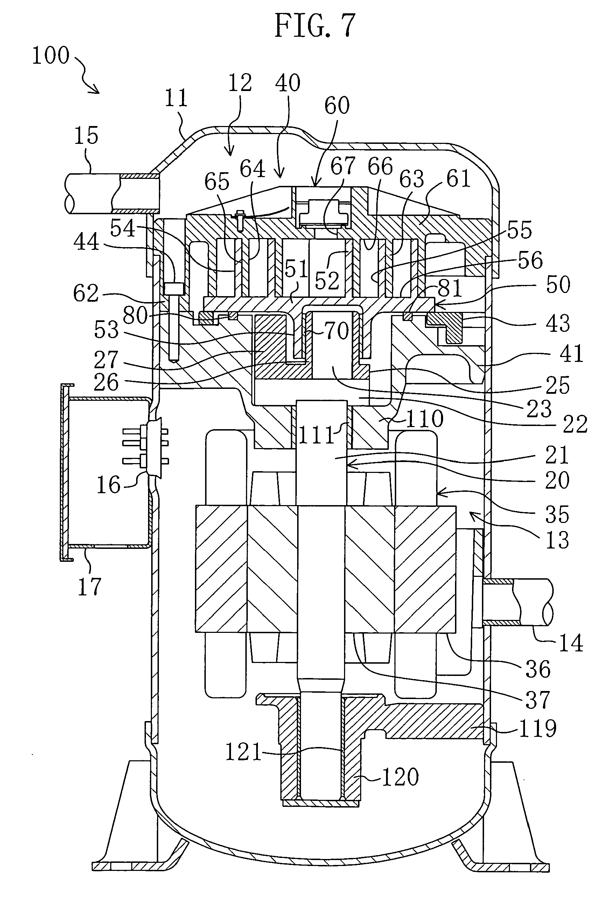

A detailed description is given of Embodiment 2 of the present invention with reference to Figure **7.**

In a scroll compressor **(100)** according to this embodiment, instead of the drive shaft **(20)** in Embodiment 1 being supported through the roller bearing **(42)** and the ball bearing **(31)** to the frame member **(41)** and the lower bearing unit **(30),** the main spindle **(21)** of the drive shaft **(20)** is supported through lubrication parts **(111, 121)** serving as bearing metals to a main bearing part **(110)** of the frame member **(41)** and a lower main bearing part **(120)** of a lower bearing unit **(119).**

The lubrication parts **(111, 121)** are formed in the shape of a cylinder and constitute sliding elements. Each lubrication part **(111, 121)** is formed by subjecting the inner periphery of its substrate made of iron to conversion treatment to have a surface roughness Ra of 1 µm and providing on the substrate inner periphery a lubrication layer made of a resin layer having a composition of PAI/FEP/PTFE = 70/25/5.

When the scroll compressor **(100)** is driven, the main spindle **(21)** of the drive shaft **(20)** slides through the lubrication parts **(111, 121)** on the main bearing part **(110)** and the lower main bearing part **(120).**

The placement of the lubrication parts **(111, 121)** having the above configuration enables the main spindle **(21)** and the lubrication parts **(111, 121)** to continue to slide together at low coefficient of friction for a very long time. The rest of the configuration, the other operations and the other effects are the same as in Embodiment 1.

### - Modification of Embodiment 2 -

In Embodiment 2, the lubrication parts **(111, 121)** are provided between the main spindle **(21)** and the main bearing part **(110)** and between the main spindle **(21)** and the lower main bearing part **(120).** Instead of this, in this embodiment, resin layers are directly formed on the main bearing part **(110)** and the lower main bearing part **(120)** or directly formed on the main spindle **(21).**

Specifically, either the inner peripheries of the main bearing part **(110)** and the lower main bearing part **(120)** or portions of the outer periphery of the main spindle **(21)** corresponding to the sliding surfaces thereof on the main bearing part **(110)** and the lower main bearing part **(120)** are subjected to conversion treatment to have a substrate surface roughness Ra of 1 µm and resin layers having a composition of PAI/FEP/PTFE = 70/25/5 are then formed on the substrate surfaces.

Thus, the main bearing part **(110)** and the lower main bearing part **(120)** constitute sliding elements having their respective resin layers formed on their respective iron substrate surfaces or the main spindle **(21)** constitutes a sliding element having resin layers formed on surface portions of the iron substrate.

According to this modification, since resin layers are directly formed either on the inner peripheries of the main bearing part **(110)** and the lower main bearing part **(120)** or on portions of the outer periphery of the main spindle **(21),** the number of processing steps can be reduced and the number of parts can also be reduced. The rest of the configuration, the other operations and the other effects are the same as in Embodiment 2.

### (Embodiment 3)

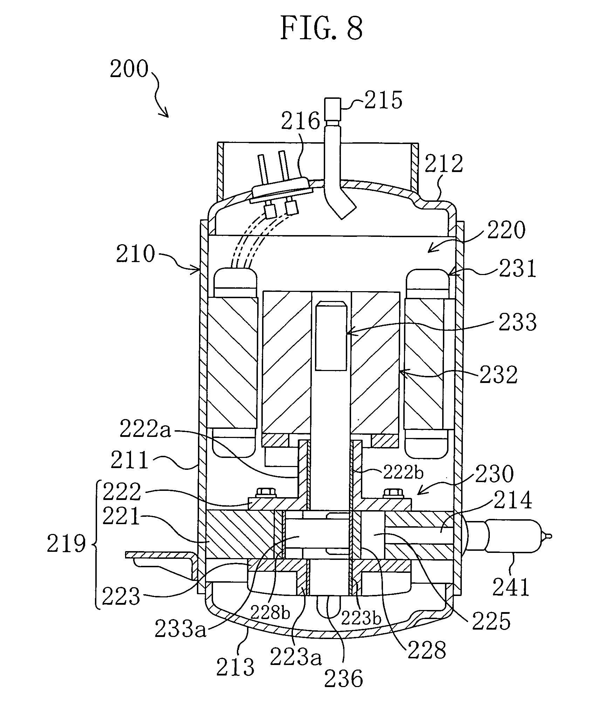

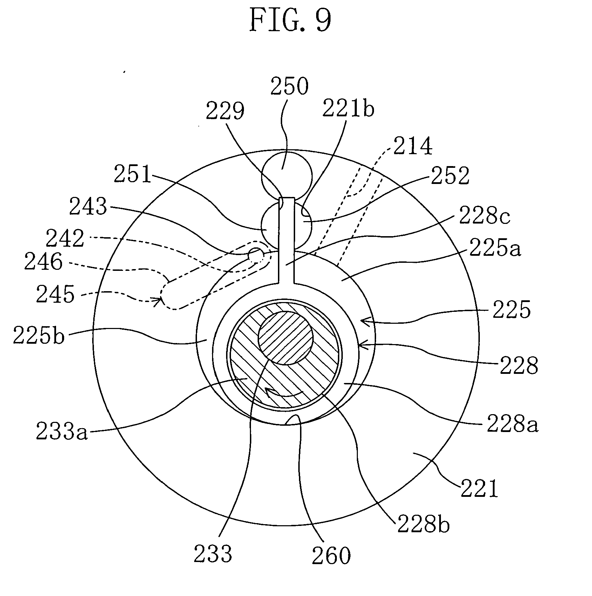

A detailed description is given of Embodiment 2 of the present invention with reference to Figures **8** and **9.**

A fluid machine according to this embodiment is a so-called rolling piston type swing compressor **(200).** The swing compressor **(200)** according to this embodiment, like those according to Embodiments 1 and 2, is provided in a refrigerant circuit of a refrigeration system and used to compress gas refrigerant that is a fluid. The swing compressor **(200)** has a fully enclosed configuration in which a compression mechanism **(230)** and an electric motor **(220)** are contained in a domed casing **(210).**

The casing **(210)** includes a cylindrical body **(211)** and end plates **(212, 213)** provided at the top and bottom of the body **(211).** A lower part of the body **(211)** is provided with a suction pipe **(241).** The upper end plate **(212)** is provided with a discharge pipe **(215)** and a terminal **(216)** for feeding electric power to the electric motor **(220).**

The compression mechanism **(230)** is disposed in a lower part of the interior of the casing **(210)** and includes a cylinder **(219)** and a rolling piston **(228)** contained in a cylinder chamber **(225)** of the cylinder **(219).** The cylinder **(219)** is composed of a cylindrical cylinder body **(221)** and a front head **(222)** and a rear head **(223)** that close the top and bottom, respectively, of the cylinder body **(221).** The cylinder chamber **(225)** is defined by the cylinder body **(221),** the front head **(222)** and the rear head **(223).**

The electric motor **(220)** includes a stator **(231)** and a rotor **(232).** The stator **(231)** is located above the compression mechanism **(230)** and fixed to the body **(211)** of the casing **(210)** and the rotor **(232)** is connected to the drive shaft **(233).**

The drive shaft **(233)** vertically passes through the cylinder chamber **(225).** The front head **(222)** and the rear head **(223)** are formed with a main bearing part **(222a)** and a sub bearing part **(223a),** respectively, for the purpose of supporting the drive shaft **(233).** The drive shaft **(233)** has an oil pump **(236)** provided at the lower end thereof. The oil pump **(236)** allows oil accumulating in the bottom of the casing **(210)** to flow through an oil feed pipe (not shown) and feeds the oil as to the cylinder chamber **(225)** of the compression mechanism **(230).**

The drive shaft **(233)** has an eccentric part **(233a)** formed in the center of the cylinder chamber **(225).** The eccentric part **(233a)** has a larger diameter than the drive shaft (233).

As shown in Figure **9,** the rolling piston **(228)** includes a piston body **(228a)** and a blade **(228c)** integrally formed with the piston body **(228)** and serving as a partition extending from the piston body **(228a).** The inner periphery of the piston body **(228a)** engages the eccentric part **(233a)** inserted in the piston body **(228a).**

The cylinder body **(221)** is formed with a bush hole **(221b).** The bush hole **(221b)** contains a pair of bushes **(251, 252)** of approximately semi-circular cross section inserted therein. Opposed flat faces of the pair of bushes **(251, 252)** define a blade groove **(229).** The blade **(228c)** is inserted in the blade groove **(229).** The pair of bushes **(251, 252)** are configured so that the blade **(228c)** can move backward and forward in the blade groove **(229)** in sandwiched relation between the pair of bushes **(251, 252).** Concurrently, the bushes **(251, 252)** is configured to oscillate together with the blade **(228c)** in the bush hole **(221b)**.

Furthermore, the cylinder body **(221)** has a bush back chamber **(250)** formed outwardly of the bush hole **(221b)** to accommodate the distal end of the blade **(228c).**

When the drive shaft **(233)** rotates with the above configuration, the rolling piston **(228)** rolls about a point on the blade **(228c)** moving backward and forward in the blade groove **(229).** This rolling provides not rotation of the piston body **(228a)** on its axis, but bodily movement thereof around the inner periphery of the cylinder chamber **(225).** Note that, during the bodily movement of the piston body **(228a),** such a slight clearance that can form a thin oil film is created at the contact point **(260)** between the piston body **(228a)** and the inner periphery of the cylinder chamber **(225).**

The blade **(228c)** partitions the cylinder chamber **(225)** into a suction side space **(225a)** and a compression side space **(225b).** The cylinder body **(221)** is formed with a suction port **(214)** communicated with the suction side space **(225a).** The suction port **(214)** is connected to the suction pipe **(241).** The front head **(222)** is formed with a discharge port **(242).** The inner periphery of the cylinder body **(221)** is formed with a discharge channel **(243)** communicated with the discharge port **(242).** The top surface of the front head **(222)** is formed with a recess **(245).** The recess **(245)** is provided with a discharge valve **(246)** for selectively opening and closing the discharge port **(215).**

When the swing compressor **(200)** as described above is driven, the drive shaft **(233)** slides on the main bearing part **(222a)** and the sub bearing part **(223a)** and the eccentric part **(233a)** of the drive shaft **(233)** slides on the piston body **(228a).** In this embodiment, these sliding parts are provided with lubrication parts **(222b, 223b, 228b)** serving as bearing metals. The lubrication parts **(222b, 223b, 228b)** are configured as in Embodiment 1 and formed in the shape of a cylinder. The lubrication parts **(222b, 223b, 228b)** are sliding elements each formed by subjecting the inner periphery of its substrate made of iron to conversion treatment to have a surface roughness of 1 µm and providing on the substrate inner periphery a lubrication layer made of a resin layer having a composition of PAI/FEP/PTFE = 70/25/5.

The placement of the lubrication parts **(222b, 223b, 228b)** having the above configuration enables the drives shaft **(233)** and the eccentric part **(233a)** of the drive shaft **(233)** to continue to slide on the lubrication parts **(222b, 223b)** and the lubrication part **(228b),** respectively, at low coefficient of friction for a very long time.

### - Modification 1 of Embodiment 3 -

Although in Embodiment 3 the sliding elements are provided as the lubrication parts **(222b, 223b, 228b)** formed of separate pieces for the main bearing part **(222a),** the sub bearing part **(223a)** and the eccentric part **(233a)** of the drive shaft **(233),** sliding elements in this modification are instead obtained either by directly forming resin layers as lubricants on portions of the outer periphery of the drive shaft **(233)** sliding on the main bearing part **(222a)** and the sub bearing part **(223a)** and the outer periphery of the eccentric part **(233a)** or by directly forming resin layers as lubricants on the inner peripheries of the main bearing part **(222a)** and the sub bearing part **(223a)** and the inner periphery of the piston body **(228a).**

Specifically, either the portions of the outer periphery of the drive shaft **(233)** sliding on the main bearing part **(222a)** and the sub bearing part **(223a)** and the outer periphery of the eccentric part **(233a)** or the inner peripheries of the main bearing part (222a), the sub bearing part **(223a)** and the piston body **(228a)** are roughened by conversion treatment to have a substrate surface roughness Ra of 1 µm and lubrication layers made of resin layers having a composition of PAI/FEP/PTFE = 70/25/5 are then formed on the substrate surfaces.

According to this modification, since not the lubrication parts **(222b, 223b, 228b)** as described in Embodiment 3 are provided but resin layers are directly formed either on the drive shaft **(233)** and the eccentric part **(233)** or on the main bearing part **(222a),** the sub bearing part **(223a)** and the piston body **(228a),** the number of processing steps can be reduced and the number of parts can also be reduced. The rest of the configuration, the other operations and the other effects are the same as in Embodiment 3.

### - Modification 2 of Embodiment 3 -

Although in Embodiment 3 the sliding elements are provided as the lubrication parts **(222b, 223b, 228b)** formed of separate pieces for the main bearing part **(222a),** the sub bearing part **(223a)** and the eccentric part **(233a)** of the drive shaft **(233),** sliding elements in this modification are instead obtained by directly forming resin layers on the entire bushes **(251, 252).**

Specifically, for the above bushes **(251, 252),** their opposed faces defining the blade groove **(229)** slide on the blade **(228c)** and the semi-circular faces of the bushes **(251, 252)** slide on the surface of the bush hole **(221b).** Therefore, in this modification, the entire surfaces of the bushes **(251, 252)** are subjected to conversion treatment to have a substrate surface roughness Ra of 1 µm and lubrication layers made of resin layers having a composition of PAI/FEP/PTFE = 70/25/5 are then formed on the substrate surfaces.

According to this modification, since resin layers are directly formed on the bushes **(251, 252),** the bushes **(251, 252)** are firmly adhered to their associated resin layers and the slidability of the blade groove **(229)** on the blade **(228c)** and the slidability of the semi-circular faces of the bushes **(251, 252)** on the bush hole **(221b)** are improved. This provides smooth forward and backward movement of the blade **(228c)** in the blade groove **(229)** and in turn enhances the reliability of bodily movement of the piston **(228).** The rest of the configuration, the other operations and the other effects are the same as in Embodiment 3.

### - Modification 3 of Embodiment 3 -

In Modification 1 of Embodiment 3, a resin layer is formed on the outer periphery of the eccentric part **(233a)** of the drive shaft **(233)** of the swing compressor **(200).** In this modification, resin layers are instead formed on the top and bottom surfaces of the eccentric part **(233a).**

Specifically, the top surface of the eccentric part **(233a)** slides on the bottom surface of the front head **(222)** and the bottom surface thereof slides on the top surface of the rear head **(223).** Therefore, in this modification, the top and bottom surfaces of the eccentric part **(233a)** are subjected to conversion treatment to have a substrate surface roughness Ra of 1 µm and lubrication layers made of resin layers having a composition of PAI/FEP/PTFE = 70/25/5 are then formed on the substrate surfaces.

According to this modification, since resin layers are directly formed on the eccentric part **(233a),** the eccentric part **(233a)** is firmly adhered to the resin layers and the clearance between the eccentric part **(233a)** and each of the front head **(222)** and the rear head **(223)** in the cylinder chamber **(225)** is reduced, thereby providing good sealing property. This enhances the reliability of this machine as a compressor. The rest of the configuration, the other operations and the other effects are the same as in Modification 1 of Embodiment 3.

If a resin layer is directly formed on the entire eccentric part **(233a),** not only the above effects can be obtained but also the slidability between the eccentric part **(233a)** and the piston body **(228a)** can be improved like Modification 1 of Embodiment 3. In addition, since there is no need to subject a plurality of portions of the eccentric part **(233a)** individually to a treatment for forming a resin layer, the processing can be simplified.

### - Modification 4 of Embodiment 3 -

In Modification 1 of Embodiment 3, a resin layer serving as a lubrication layer is formed on the inner periphery of the piston body **(228a).** In this modification, a resin layer is instead formed on the whole of the rolling piston **(228).**

Specifically, the top surface of the rolling piston **(228)** slides on the bottom surface of the front head **(222),** the bottom surface thereof slides on the top surface of the rear head **(223),** the outer periphery of the piston body **(228a)** slides on the inner periphery of the cylinder body **(221),** the inner periphery of the piston body **(228a)** slides on the eccentric part **(233a),** and the side faces of the blade **(228c)** slide on the opposed faces of the bushes **(251, 252).** Therefore, in this modification, the entire surface of the piston **(228)** is subjected to conversion treatment so that its substrate has a surface roughness Ra of 1 µm and a lubrication layer made of a resin layer having a composition of PAI/FEP/PTFE = 70/25/5 is then formed on the entire substrate.

According to this modification, since a resin layer is directly formed on the entire rolling piston **(228),** there is no need to subject a plurality of portions of the rolling piston **(228)** individually to a treatment for forming a resin layer, thereby simplifying the processing. Furthermore, the slidability between the blade **(228c)** and the bushes **(252, 252)** can be improved, which provides smooth forward and backward movement of the blade **(228c)** and in turn provides accurate bodily movement of the piston body **(228a).** Furthermore, the clearance between the rolling piston **(228)** and the inner periphery of the cylinder chamber **(225)** can be reduced, thereby providing good sealing property. This enhances the reliability of this machine as a compressor. The rest of the configuration, the other operations and the other effects are the same as Embodiment 3.

### - Modification 5 of Embodiment 3 -

In Modification 3 of Embodiment 3, resin layers are formed as lubricants on the eccentric part **(233a)** and the piston **(228a).** In this modification, resin layers are instead directly formed on the bottom surface of the front head **(222),** the top surface of the rear head **(223)** and the inner periphery of the cylinder body **(221).**

Specifically, the bottom surface of the front head **(222)** slides on the top surface of the eccentric part **(233a)** and the top surface of the piston body **(228a),** the top surface of the rear head **(223)** slides on the bottom surface of the eccentric part **(233a)** and the bottom surface of the piston body **(228a),** the inner periphery of the cylinder body **(221)** slides on the outer periphery of the piston body **(228a).** Therefore, in this modification, the bottom surface of the front head **(222),** the top surface of the rear head **(223)** and the inner periphery of the cylinder body **(221)** are subjected to conversion treatment to have a substrate surface roughness Ra of 1 µm and lubrication layers made of resin layers having a composition of PAI/FEP/PTFE = 70/25/5 are then formed on the substrate surfaces.

According to this modification, since resin layers are directly formed on the bottom surface of the front head **(222),** the top surface of the rear head **(223)** and the inner periphery of the cylinder body **(221),** the resin layers are firmly adhered to the front head **(222),** the rear head **(223)** and the cylinder body **(221).** Furthermore, since resin layers are formed on the bottom surface of the front head **(222),** the top surface of the rear head **(223)** and the inner periphery of the cylinder body **(221)** that constitute the inside wall surface of the cylinder chamber **(225),** the clearances of the inside wall surface of the cylinder chamber **(225)** to the top and bottom surfaces of the eccentric part **(233a)** and the top and bottom surfaces and the outer periphery of the piston body **(228a)** that slide on the inside wall surface of the cylinder chamber **(225)** can be reduced, thereby providing good sealing property. This enhances the reliability of this machine as a compressor. The rest of the configuration, the other operations and the other effects are the same as Embodiment 3.

### (Embodiment 4)

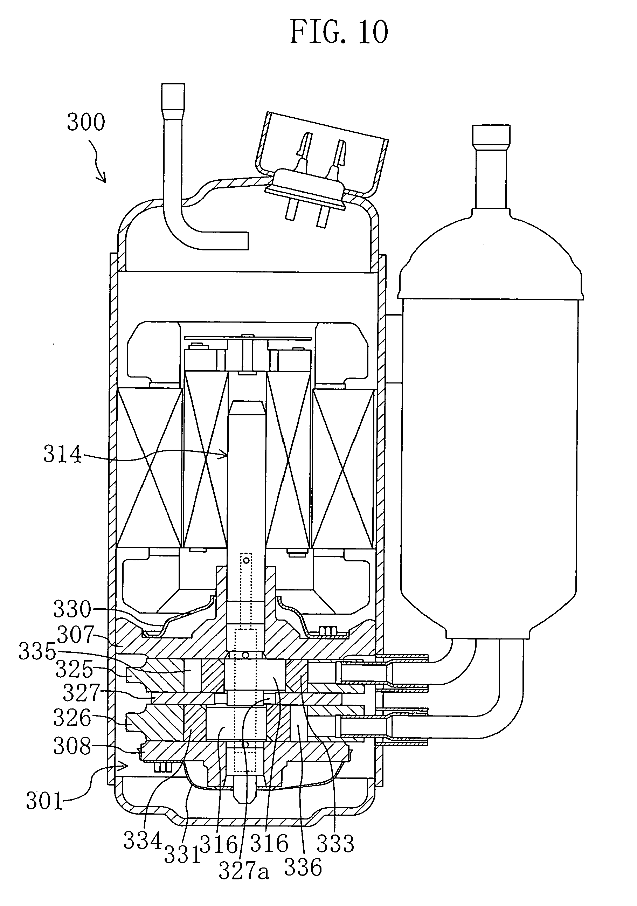

A fluid machine according to Embodiment 4 of the present invention is a swing compressor **(300)** as shown in Figure **10.** Although the compression mechanism **(230)** in Embodiment 3 includes a single cylinder **(219),** a compression mechanism **(301)** in this embodiment includes a plurality of cylinder bodies **(325, 326).** The rest of the configuration and the other operations are the same as in the swing compressor **(200)** according to Embodiment 3.

The swing compressor **(300)** according to this embodiment, like Embodiment 3, is provided in a refrigerant circuit of a refrigeration system and used to compress gas refrigerant that is a fluid. A description is given here only of the compression mechanism **(301)** including a plurality of cylinder bodies **(325, 326).**

The compression mechanism **(301)** includes two cylinder bodies **(325, 326)** and the two cylinder bodies **(325, 326)** are juxtaposed in a direction of extension of a drive shaft **(314),** i.e., in a vertical direction.

A front head **(307)** is disposed on top of the first cylinder body **(325)** placed upwardly of the second cylinder body **(326).** A rear head **(308)** is disposed on the underside of the second cylinder body **(326)** downwardly of the first cylinder body **(325).** A middle plate **(327)** is disposed as a partition plate between the first cylinder body **(325)** and the second cylinder body **(326).** The middle plate **(327)** is formed at the center with a through hole **(327a)** through which the drive shaft **(314)** passes.

The front head **(307),** the first cylinder body **(325),** the middle plate **(327),** the second cylinder body **(326)** and the rear head **(308)** are arranged in this order and fastened together by bolts. The drive shaft **(314)** passes through both the heads **(307, 308),** both the cylinder bodies **(325, 326)** and the middle plate **(327).**

The first cylinder body **(325)** contains a first rolling piston **(333)** disposed therein. The second cylinder body **(326)** contains a second rolling piston **(334)** disposed therein. Furthermore, in this embodiment, two compression chambers are formed: a first compression chamber **(335)** defined by the front head **(307),** the first cylinder body **(325),** the first piston **(333)** and the middle plate **(327)** and a second compression chamber **(336)** defined by the rear head **(308),** the second cylinder body **(326),** the second piston **(334)** and the middle plate **(327).**

When the swing compressor **(300)** is driven, the top surface of the middle plate **(327)** slides on the bottom surface of the first rolling piston **(333)** and the bottom surface of the middle plate **(327)** slides on the top surface of the second rolling piston **(334).** Therefore, in this embodiment, the top and bottom surfaces of the middle plate **(327)** are subjected to conversion treatment to have a substrate surface roughness Ra of 1 µm and resin layers having a composition of PAI/FEP/PTFE = 70/25/5 are then directly formed on the substrate surfaces.

According to this embodiment, since resin layers are directly formed on the middle plate **(327),** the middle plate **(327)** is firmly adhered to the resin layers. Furthermore, the clearance between the sliding surfaces formed of the top surface of the middle plate **(327)** and the bottom surface of the first rolling piston **(333)** and the clearance between the sliding surfaces formed of the bottom surface of the middle plate **(327)** and the top surface of the second rolling piston **(334)** can be reduced, thereby providing good sealing property. This enhances the reliability of this machine as a compressor. The rest of the configuration, the other operations and the other effects are the same as Embodiment 3.

### - Modification of Embodiment 4 -

In Embodiment 4, resin layers are formed as lubricants on the top and bottom surfaces of the middle plate **(327).** In this modification, resin layers are instead directly formed on the entire first rolling piston **(333)** and the entire second rolling piston **(334).**

Specifically, the entire surfaces of the first rolling piston **(333)** and the second rolling piston **(334)** are subjected to conversion treatment so that their substrates have a surface roughness Ra of 1 µm and resin layers having a composition of PAI/FEP/PTFE = 70/25/5 are then formed on the substrate surfaces.

According to this modification, since resin layers are directly formed on the first rolling piston **(333)** and the second rolling piston **(334),** the first rolling piston **(333)** and the second rolling piston **(334)** are firmly adhered to their respective resin layers. Furthermore, like Embodiment 4, the clearance between the bottom surface of the first rolling piston **(333)** and the top surface of the middle plate **(327)** and the clearance between the top surface of the second rolling piston **(334)** and the bottom surface of the middle plate **(327)** can be reduced, thereby providing good sealing property. This enhances the reliability of this machine as a compressor. The rest of the configuration, the other operations and the other effects are the same as Embodiment 4.

### (Embodiment 5)

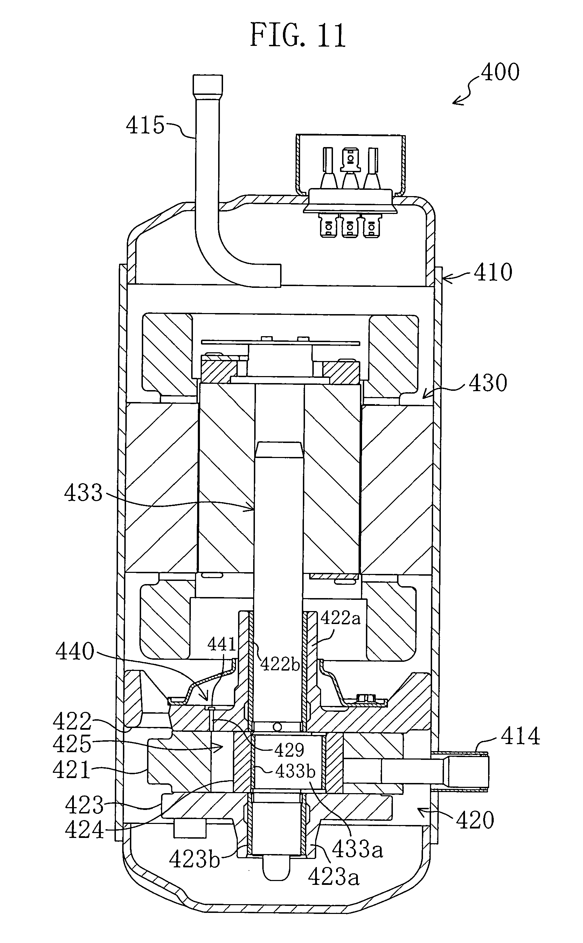

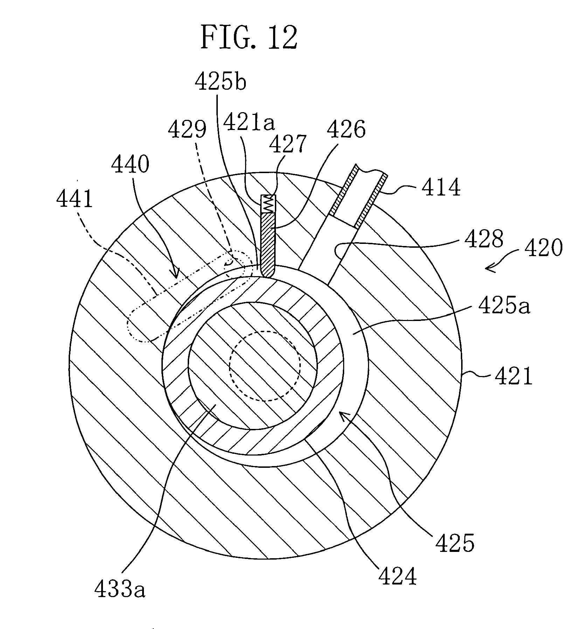

A fluid machine according to this embodiment is a rotary piston type rotary compressor **(400)** as shown in Figures **11** and **12.**

The rotary compressor **(400)** has substantially the same configuration as the swing compressor **(200)** according to Embodiment 3 and, specifically, includes a compression mechanism **(420)** and an electric motor **(430)** contained in a fully enclosed casing **(410)** and has a discharge pipe **(415)** and a suction pipe **(414)** mounted to the casing **(410).** As shown in Figure **12,** the rotary compressor **(400)** has a configuration in which a rotary piston **(424)** and a blade **(426)** of the compression mechanism **(420)** are separately provided and the rotary piston **(424)** bodily moves around the inner periphery of the cylinder chamber **(425)** while rotating itself on its axis.

Furthermore, the rotary compressor **(400),** like Embodiment 1, is provided in a refrigerant circuit of a refrigeration system and used to compress gas refrigerant that is a fluid. A description is given here only of different constructional points of the rotary compressor **(400)** according to this embodiment from the swing compressor **(200)** according to Embodiment 3, i.e., only of the compression mechanism **(420).**

The compression mechanism **(420)** includes a cylinder body **(421),** a front head **(422)** and a rear head **(423)** and has a cylinder chamber **(425)** defined by the cylinder body **(421),** the front head **(422)** and the rear head **(423).**

The front head **(422)** and the rear head **(423)** are formed with a main bearing part **(422a)** and a sub bearing part **(423a),** respectively, both for supporting a drive shaft **(433).** An eccentric part **(433a)** of the drive shaft **(433)** located inside the cylinder chamber **(425)** is formed to have a larger diameter than a main body **(433b)** of the drive shaft **(433).** The eccentric part **(433a)** is inserted in the rotary piston **(424)** of the compression mechanism **(420).** The rotary piston **(424)** is formed in the shape of a ring and configured so that its outer periphery can contact the inner periphery of the cylinder **(421)** substantially at a single point.

The cylinder **(421)** is formed with a blade groove **(421a)** along a radial direction of the cylinder **(421).** Fitted in the blade groove **(421a)** is the blade **(426)** in sliding contact with the cylinder **(421).** The blade **(426)** is urged inwardly in the radial direction by a spring **(427)** seated in the blade groove **(421a)** and its distal end is always in contact with the outer periphery of the rotary piston **(424).**

The blade **(426)** partitions the cylinder chamber **(425)** between the inner periphery of the cylinder **(421)** and the outer periphery of the rotary piston **(424)** into a suction chamber **(425a)** and a compression chamber **(425b).** The cylinder **(421)** is formed with a suction port **(428)** that communicates the suction pipe **(414)** with the suction chamber **(425a).** Furthermore, the cylinder **(421)** is formed with a discharge port **(429)** that communicates the compression chamber **(425b)** with the interior space of the casing **(410).**

The top surface of the front head **(422)** is formed with a recess **(440).** The recess **(440)** is provided with a discharge valve **(441)** for selectively opening and closing the discharge port **(429).**

When the swing compressor **(200)** as described above is driven, the outer periphery of the rotary piston **(421)** slides on the inner periphery of the cylinder **(421),** the top surface of the rotary piston **(424)** slides on the bottom surface of the front head **(422)** and the bottom surface of the rotary piston **(424)** slides on the top surface of the rear head **(423).** Therefore, in this embodiment, the entire surface of the rotary piston **(424)** is subjected to conversion treatment so that its substrate has a surface roughness Ra of 1 µm and a resin layer having a composition of PAI/FEP/PTFE = 70/25/5 is then directly formed on the entire substrate.

Since, thus, a resin layer is directly formed on the entire rotary piston **(424),** the rotary piston **(424)** and the resin layer are firmly adhered to each other. Furthermore, the slidability of the rotary piston **(424)** on each of the front head **(422)** and the rear head **(423)** can be improved and the clearance between the sliding surfaces can be reduced, thereby providing good sealing property of the cylinder chamber **(425).**

Also in this embodiment, the sliding parts as in Embodiment 3 and Modifications 1 to 5 of Embodiment 3 may be provided with resin layers serving as lubrication layers.

Specifically, the drive shaft **(433)** slides on the main bearing part **(422a)** and the sub bearing part **(423a)** and the eccentric part **(433a)** slides on the piston **(424).** Therefore, these sliding parts may be provided with lubrication parts **(422b, 423b, 433b)** serving as bearing metals. The lubrication parts **(422b, 423b, 433b)** are sliding elements having a cylindrical shape and obtained by subjecting the peripheries of their substrates made of iron to conversion treatment to have a surface roughness Ra of 1 µm and forming on the substrate surfaces lubrication layers made of resin layers having a composition of PAI/FEP/PTFE = 70/25/5. The provision of the lubrication parts **(422b, 423b, 433b)** improves the slidability in the sliding part between the drive shaft **(433)** and the main bearing part **(422a)** and the sliding part between the drive shaft **(433)** and the sub bearing part **(423a)** and the sliding part between the eccentric part **(433a)** and the piston **(424).**

Alternatively, instead of provision of the lubrication parts **(422b, 423b, 433b),** either portions of the outer periphery of the drive shaft **(433)** sliding on the main bearing part **(422a)** and the sub bearing part **(423a)** and the outer periphery of the eccentric part **(433a)** or the inner peripheries of the main bearing part **(422a)** and the sub bearing part **(423a)** and the inner periphery of the piston **(424)** may be subjected to conversion treatment to have a substrate surface roughness Ra of 1 µm and lubrication layers made of resin layers having a composition of PAI/FEP/PTFE = 70/25/5 may be then formed on the substrate surfaces. This improves, without provision of the lubrication parts **(422b, 423b, 433b),** the slidability in the sliding part between the drive shaft **(433)** and the main bearing part **(422a)** and the sliding part between the drive shaft **(433)** and the sub bearing part **(423a)** and the sliding part between the eccentric part **(433a)** and the piston **(424).**

Furthermore, since the blade **(426)** slides on the blade groove **(421a),** either the surface of the blade **(426)** or the surface of the blade groove **(421a)** may be subjected to conversion treatment so that the substrate has a surface roughness Ra of 1 µm and a lubrication layer made of a resin layer having a composition of PAI/FEP/PTFE = 70/25/5 may be then formed on the substrate surface. This provides smooth forward and backward movement of the blade **(426)** in the blade groove **(421a)** and in turn provides smooth bodily movement of the piston **(424)** accompanied by its rotation on its axis. Thus, the reliability of this machine as a compressor can be enhanced.

Furthermore, since the top surface of the eccentric part **(433a)** slides on the bottom surface of the front head **(422)** and the bottom surface of the eccentric part **(433a)** slides on the top surface of the rear head **(423),** the top and bottom surfaces of the eccentric part **(433a)** may be subjected to conversion treatment to have a substrate surface roughness Ra of 1 µm and lubrication layers made of resin layers having a composition of PAI/FEP/PTFE = 70/25/5 may be then formed on the substrate surfaces. Thus, the slidability of the surfaces of the eccentric part **(433a)** sliding on the front head **(422)** and the rear head **(423)** can be improved. In addition, the clearances in the sliding parts can be reduced, thereby good sealing property.

Furthermore, the inner periphery of the cylinder body **(421),** the bottom surface of the front head **(422)** and the top surface of the rear head **(423),** which define the cylinder chamber **(425),** may be subjected to conversion treatment so that their substrates have a surface roughness Ra of 1 µm and lubrication layers made of resin layers having a composition of PAI/FEP/PTFE = 70/25/5 may be then formed on the substrate surfaces. This improves the slidability of the inside wall surface of the cylinder chamber **(425)** on the surfaces sliding on the inside wall surface of the cylinder **(425):** the top and bottom surfaces of the eccentric part **(433a),** the top and bottom surfaces and outer periphery of the piston **(424),** and the top and bottom surfaces of the blade **(426).** Furthermore, the clearances in the sliding parts can be reduced, thereby good sealing property. This enhances the reliability of this machine as a compressor. The rest of the configuration, the other operations and the other effects are the same as Embodiment 3.

### (Other Embodiments)

**The** above embodiments may have the following configurations.

In Embodiments 1 to 5, resin layers are formed as lubricants on bearing parts or sliding parts, such as scrolls, cylinders and pistons. However, if there is any other sliding part, a lubrication part may be formed by likewise roughening the sliding part to have a predetermined substrate surface roughness Ra and then forming a resin layer containing fluorine-containing resin on the substrate surface.

Furthermore, in Embodiments 1 to 5, the sliding elements of the scroll compressors **(10, 100),** the swing compressors **(200, 300)** and the rotary compressor **(400)** are roughened so that their substrates have a predetermined surface roughness Ra and resin layers containing fluorine-containing resin are then formed on the substrate surfaces. The compressor used may be any type of compressor that compresses a fluid. The fluid is not limited to refrigerant. Furthermore, sliding elements according to the present invention are not limited to those used in compressors. Specifically, sliding elements according to the present invention may be those in any fluid machines other than compressors or those in any sliding parts, such as drive units or rotating parts in vehicles or manufacturing apparatuses.

In the sliding part, one of two elements sliding on each other may be roughened into a predetermined substrate surface roughness Ra and a resin layer containing fluorine-containing resin may be formed on the roughened surface. Alternatively, both the members in the sliding part may be roughened into a predetermined substrate surface roughness Ra and resin layers containing fluorine-containing resin may be formed on both the roughened surfaces.

The material of the substrate of the sliding element is not limited to iron and may be selected from metals other than iron, such as aluminum.

The treatment for roughening the substrate surface is not limited to conversion treatment and various known surface roughening processes, such as sand blasting, can be employed. The chemical agent used for conversion treatment is not limited to manganese phosphate and other phosphates or known chemical agents can be employed.

### Industrial Applicability

As described so far, the sliding element and compressor according to the present invention have excellent slidability and, therefore, are useful for air conditioners, vehicles, manufacturing apparatuses and machine tools.

## Claims

1. A sliding element including a fluororesin-containing resin layer on a surface of a metal substrate, wherein
the surface of the substrate is subjected to surface roughening to have a surface roughness larger than 0.5 µm and smaller than 10 µm in terms of the arithmetic mean height Ra of the profile of the surface.

2. The sliding element of claim 1, wherein the surface of the substrate is subjected to surface roughening to have a surface roughness larger than 0.75 µm and smaller than 10 µm in terms of the arithmetic mean height Ra of the profile of the surface.

3. The sliding element of claim 1, wherein the surface roughening is conversion treatment.

4. The sliding element of claim 1, wherein the resin layer contains polyamide-imide resin.

5. The sliding element of claim 1, wherein a surface layer of the substrate is subjected to no hardening.

6. A fluid machine including a sliding element,
the sliding element including a fluororesin-containing resin layer on at least part of a surface of a metal substrate,
the surface of the substrate under the resin layer being subjected to surface roughening to have a surface roughness larger than 0.5 µm and smaller than 10 µm in terms of the arithmetic mean height Ra of the profile of the surface.

7. The fluid machine of claim 6, wherein the surface of the substrate under the resin layer is subjected to surface roughening to have a surface roughness larger than 0.75 µm and smaller than 10 µm in terms of the arithmetic mean height Ra of the profile of the surface.

8. The fluid machine of claim 6, wherein the surface roughening is conversion treatment.

9. The fluid machine of claim 6, wherein the resin layer contains polyamide-imide resin.

10. The fluid machine of claim 6, wherein the sliding element is exposed to refrigerant.

11. The fluid machine of claim 10, wherein the refrigerant contains a fluorine-containing material.

12. The fluid machine of claim 10, wherein the mixture ratio of lubricant to the refrigerant is 5% or less.

13. The fluid machine of claim 10, wherein substantially no lubricant is mixed in the refrigerant.

14. The fluid machine of claim 6, further comprising
a scroll mechanism **(40)** including a pair of scrolls **(50, 60)** meshing with each other, wherein
at least one of the pair of scrolls **(50, 60)** constitutes the sliding element, and
the scroll **(50, 60)** serving as the sliding element includes the resin layer on at least part of a surface of a metal substrate.

15. The fluid machine of claim 14, wherein the resin layer is directly formed on a bearing part **(53)** of the movable scroll **(50).**

16. The fluid machine of claim 14, wherein the resin layer is directly formed on the entire movable scroll **(50).**

17. The fluid machine of claim 14, wherein the resin layer is directly formed on a movable wrap **(52)** of the movable scroll **(50).**

18. The fluid machine of claim 14, wherein the resin layer is directly formed on an entire surface of the fixed scroll **(60)** opposed to the movable scroll **(50).**

19. The fluid machine of claim 6, further comprising
a scroll mechanism **(40)** including a pair of scrolls **(50, 60)** meshing with each other, wherein
a thrust bearing **(80)** of the movable scroll **(50)** of the pair of scrolls **(50, 60)** constitutes the sliding element, and
the thrust bearing **(80)** serving as the sliding element includes the resin layer directly formed on a sliding surface **(81)** thereof on the movable scroll **(50).**
